# FASCICULE DE BREVET EUROPEEN

(11) **EP 3 389 224 B1**
(45) Date de publication et mention de la délivrance du brevet: **30.03.2022**
(21) Numéro de dépôt: 18167013.4
(22) Date de dépôt: 12.04.2018
(51) Int. Cl.: H04L 12/26, H04L 12/939

(54) **PROCEDE DE GENERATION ET DE CONTROLE DE TRAFIC DE TEST, PORT D'ENTREE OU DE SORTIE DE COMMUTATEUR ET COMMUTATEUR ASSOCIES**
VERFAHREN ZUR ERZEUGUNG UND KONTROLLE EINES TEST-DATENVERKEHRS, ENTSPRECHENDER EINGANGS- ODER AUSGANGSANSCHLUSS EINES SCHALTERS UND ENTSPRECHENDER SCHALTER
METHOD FOR GENERATING AND CONTROLLING TEST TRAFFIC, ASSOCIATED SWITCH INPUT OR OUTPUT PORT AND SWITCH

(30) Priorité: 13.04.2017 FR 1753247
(43) Date de publication de la demande: 17.10.2018
(73) Titulaire: Bull SAS, 78340 Les Clayes-sous-Bois (FR)
(72) Inventeur: BLANCHARD, Vivian, 78100 SAINT GERMAIN EN LAYE (FR); MARLIAC, Laurent, 06700 SAINT LAURENT DU VAR (FR); RIGAL, Dominique, 06200 NICE (FR); LAGADEC, Pierre Axel, 06270 VILLENEUVE-LOUBET (FR)
(74) Mandataire: Plasseraud IP

(56) Documents cités:
- EP-A1- 2 299 633
- EP-A2- 0 518 199
- US-B1- 8 743 715
- AGRAWAL VISHWANI D ET AL: "Built-in self-test for digital integrated circuits", AT & T TECHNICAL JOURNAL, AMERICAN TELEPHONE AND TELEGRAPH CO. NEW YORK, US, vol. 73, no. 2, 1 mars 1994 (1994-03-01), pages 30-39, XP011628378, ISSN: 8756-2324, DOI: 10.1002/J.1538-7305.1994.TB00576.X [extrait le 2014-03-15]

## Description

### DOMAINE DE L'INVENTION

L'invention concerne le domaine des procédé de génération et de contrôle de trafic de test, au sein d'un réseau de nœuds de calcul, de manière à détecter et à localiser une défaillance de câblage ou de routage au sein de ce réseau entraînant une défaillance de fonctionnement de ce réseau.

### CONTEXTE DE L'INVENTION

Selon un premier art antérieur, il est connu un logiciel de génération et de contrôle de trafic de test envoyant un ou plusieurs messages d'un nœud de calcul terminal à un autre nœud de calcul terminal dans le réseau. Ce type de procédé de génération et de contrôle de trafic de test d'une part présente une efficacité globalement limitée et d'autre part peut entraîner un niveau de perturbation notable dans le réseau pendant ce processus de vérification.

Selon un deuxième art antérieur, il est aussi connu un procédé de test très local des liens d'un port de sortie au port d'entrée qui lui est directement connecté. Ce second type de procédé de test est d'une part limité à un type précis de défaillance et est d'autre part incapable de localiser une défaillance de câblage ou de routage au sein d'un réseau par un procédé de test plutôt global le long d'un chemin dans le réseau qui peut être assez étendu. Danse ce contexte, le brevet EP 518199 concerne un procédé de test qui est réalisé à l'intérieur d'un même commutateur, et non pas entre deux commutateurs distincts situés à différents endroits du réseau, d'un commutateur émetteur vers un autre commutateur destinataire. Le brevet EP 2299633 concerne un procédé de test réalisé avec un équipement terminal extérieur aux commutateurs reste du réseau.

### RESUME DE L'INVENTION

Le but de la présente invention est de fournir un procédé de génération et de contrôle d'un trafic de test, palliant au moins partiellement l'un et/ou l'autre des inconvénients précités.

Plus particulièrement, l'invention vise à fournir un procédé de génération, au niveau de commutateurs émetteurs de test d'un réseau de nœuds de calcul, d'un trafic de test, et de contrôle, au niveau de commutateurs destinataires de test de ce réseau, de ce trafic de test, ce trafic de test étant généré en entrée d'un port d'entrée ou de sortie émetteur et étant contrôlé par filtrage en sortie d'un porté d'entrée ou de sortie destinataire.

L'implémentation, au niveau d'au moins certains commutateurs, d'un composant générateur de trafic de test, et au niveau d'au moins certains commutateurs, identiques et/ou différents, d'un composant contrôleur de trafic de test, améliore beaucoup le procédé de vérification de câblage au sein d'un réseau de nœuds de calcul, un nœud de calcul étant un terminal de réseau essentiellement dédié à réaliser des calculs, c'est-à-dire par exemple un processeur de calcul.

En effet, l'invention propose un procédé de vérification du câblage du réseau d'un port d'un commutateur à un autre port d'un autre commutateur ou éventuellement du même commutateur qui est essentiellement basé sur l'ajout de composants, c'est-à-dire essentiellement hardware, au contraire du procédé de vérification du câblage du réseau selon l'art antérieur qui est essentiellement basé sur l'implémentation de programmes de génération et de contrôle de trafic de test, c'est-à-dire essentiellement software ou logiciel, vérifiant quant à lui la circulation de données d'un nœud de calcul terminal à un autre nœud de calcul terminal du réseau.

Le procédé de vérification du câblage du réseau proposé par l'invention présente plusieurs avantages. Tout d'abord, grâce à ce procédé de vérification du câblage du réseau, il est plus facile de localiser précisément un problème au cœur du réseau, au lieu de, soit simplement savoir qu'un chemin de bout en bout entre deux terminaux est défectueux sans savoir plus précisément où se situe la défaillance, soit ne vérifier qu'un bout de chemin très réduit au cœur du réseau comme vérifier la présence ou non d'une défaillance entre un port de sortie et le port d'entrée qui lui est associé. Ensuite, la vérification peut déjà être effectuée même avant l'installation des nœuds de calcul terminaux, seulement en présence des commutateurs du réseau et de leurs interconnexions, sans nécessiter d'attendre l'installation complète du réseau avec tous les nœuds de calcul terminaux. Enfin, selon certains modes de réalisation préférentiels de l'invention, cette implémentation de composants générateur et contrôleur de trafic de test peut se faire simplement, avec une perturbation minimale du cœur de réseau, c'est-à-dire notamment sans modifier les tables de routage des différents commutateurs du réseau ; il suffit pour cela d'affecter à chacun de ces composants, générateur et contrôleur de trafic de test, le même identifiant que le port d'entrée ou que le port de sortie auquel il est rattaché et qui est déjà contenu dans toutes les tables de routage des différents commutateurs du réseau.

De préférence, dans le procédé de génération et de contrôle de trafic de test selon l'invention, à chaque composant générateur de trafic de test est affecté le même identifiant que l'identifiant du port d'entrée ou de sortie émetteur de test du commutateur émetteur de test auquel ce composant générateur est dédié, et/ou à chaque composant contrôleur de trafic de test est affecté le même identifiant que l'identifiant du port d'entrée ou de sortie destinataire de test du commutateur destinataire de test auquel ce composant contrôleur est dédié.

En résumé, l'implémentation de composants hardware au niveau des commutateurs du réseau plutôt que l'ajout d'un logiciel supplémentaire allant d'un terminal à un autre terminal du réseau présente plusieurs avantages parmi lesquels : d'une part une localisation plus précise de la défaillance détectée dans le réseau, et d'autre part une possibilité de vérification avant installation des terminaux, le tout avantageusement avec une perturbation réduite voire minimisée du fonctionnement du réseau, notamment préférentiellement l'absence de modification des tables de routage des commutateurs du réseau.

Selon des modes de réalisation préférentiels de l'invention, dans le réseau, l'intégrité de tous les chemins peut être testée, ainsi que leur comportement et leur performance, la génération du trafic de test permet de tester la topologie du réseau et sa fiabilité, la plupart des caractéristiques du trafic de test sont paramétrables, et à condition que la densité des composants générateur et contrôleur de trafic de test soit suffisante, toutes les couches du réseau peuvent être testées et vérifiées.

Selon des modes de réalisation préférentiels de l'invention, un réseau comprenant au moins plusieurs milliers, voire au moins plusieurs dizaines de milliers de nœuds de calcul, par exemple 64000 nœuds de calcul, peut être testé efficacement.

A cette fin, la présente invention propose un procédé de génération, au niveau de commutateurs émetteurs de test d'un réseau de nœuds de calcul, d'un trafic de test, et de contrôle, au niveau de commutateurs destinataires de test de ce réseau, de ce trafic de test, comprenant : la possibilité de génération et d'émission, au niveau de chaque port d'entrée ou de sortie émetteur de test de chaque commutateur émetteur de test, d'un trafic de test, à destination de n'importe quel port d'entrée ou de sortie destinataire de test de n'importe quel commutateur destinataire de test, la sélection d'au moins un port d'entrée ou de sortie émetteur de test d'un commutateur émetteur de test et d'au moins un port d'entrée ou de sortie destinataire de test d'un commutateur destinataire de test, la génération et l'émission, au moins au niveau d'un port d'entrée ou de sortie émetteur de test sélectionné d'un commutateur émetteur de test sélectionné, d'un trafic de test, à destination au moins d'un port d'entrée ou de sortie destinataire de test sélectionné d'un commutateur destinataire de test sélectionné, ledit trafic de test étant généré et émis par un composant générateur de trafic configuré comme une entrée supplémentaire dudit port d'entrée ou de sortie émetteur de test sélectionné, ledit trafic de test étant contrôlé par un composant contrôleur de trafic configuré pour filtrer la sortie dudit port d'entrée ou de sortie destinataire de test sélectionné.

A cette fin, afin d'améliorer le procédé de vérification du réseau en améliorant la génération du trafic de test, la présente invention propose aussi, un port d'entrée ou de sortie d'un commutateur de réseau de nœuds de calcul, comprenant : une ou plusieurs entrées de réception de trafic fonctionnel, une entrée supplémentaire d'émission de trafic de test, un composant générateur de trafic de test configuré au niveau de cette entrée supplémentaire, un bloc d'arbitrage entre lesdites entrées, une sortie d'émission du trafic en fonction de l'arbitrage réalisé par le bloc d'arbitrage.

A cette fin, afin d'améliorer le procédé de vérification du réseau en améliorant le contrôle du trafic de test, la présente invention propose aussi, un port d'entrée ou de sortie d'un commutateur de réseau de nœuds de calcul, comprenant : plusieurs entrées de réception de trafic fonctionnel, un bloc d'arbitrage entre lesdites entrées, une sortie d'émission du trafic en fonction de l'arbitrage réalisé par le bloc d'arbitrage, un composant contrôleur de trafic configuré pour filtrer ladite sortie d'émission du trafic.

A cette fin, afin d'améliorer le procédé de vérification du réseau en améliorant simultanément la génération et le contrôle du trafic de test, la présente invention propose également, un port d'entrée ou de sortie d'un commutateur de réseau de nœuds de calcul, comprenant : une ou plusieurs entrées de réception de trafic fonctionnel, une entrée supplémentaire d'émission de trafic de test, un composant générateur de trafic de test configuré au niveau de cette entrée supplémentaire, un bloc d'arbitrage entre lesdites entrées, une sortie d'émission du trafic en fonction de l'arbitrage réalisé par le bloc d'arbitrage, un composant contrôleur de trafic configuré pour filtrer ladite sortie d'émission du trafic.

A cette fin, afin d'améliorer le procédé de vérification du réseau en améliorant la génération et/ou le contrôle du trafic de test, et ceci au niveau d'un nombre d'abord suffisant ensuite croissant de ports d'entrée ou de sortie d'un nombre d'abord suffisant et ensuite croissant de commutateurs dans le réseau, pour améliorer la couverture du réseau en termes de détection de défaillance de câblage au sein du réseau, la présente invention propose encore, un commutateur comprenant plusieurs ports d'entrée et plusieurs ports de sortie, caractérisé en ce qu'au moins un ou plusieurs de ses ports d'entrée ou au moins un ou plusieurs de ses ports de sortie, de préférence la majorité de ses ports d'entrée ou la majorité de ses ports de sortie, encore plus de préférence la totalité de ses ports d'entrée ou la totalité de ses ports de sortie, sont des ports d'entrée ou de sortie selon l'invention.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un ou l'autre des objets de l'invention précités.

De préférence, chaque port d'entrée ou de sortie émetteur de test de chaque commutateur émetteur de test comporte un composant générateur de trafic de test qui lui est dédié. Ainsi, l'implémentation est encore plus complètement hardware, il n'y a même pas lieu de prévoir des couches logicielles pour que plusieurs ports d'entrée et ou de sortie puissent le cas échéant échanger et partager un composant générateur de trafic de test.

De préférence, chaque port d'entrée ou de sortie destinataire de test de chaque commutateur destinataire de test comporte un composant contrôleur de trafic de test qui lui est dédié. Ainsi, l'implémentation est encore plus complètement hardware, il n'y a même pas lieu de prévoir des couches logicielles pour que plusieurs ports d'entrée et ou de sortie puissent le cas échéant échanger et partager un composant contrôleur de trafic de test.

De préférence, la génération, au niveau d'au moins un commutateur émetteur de test, d'un trafic de test, et le contrôle, au niveau d'au moins un commutateur destinataire de test, de ce trafic de test, sont réalisés en supplément du trafic fonctionnel de ce réseau de nœuds de calcul. Ainsi, il y a la possibilité de réaliser le test, même pendant le fonctionnement du réseau, ce qui rend ce test « temps réel », et même sans interrompre le fonctionnement, ce qui rend ce test « peu intrusif ». De plus, cela peut aussi permettre de créer des conditions particulières, par exemple en surchargeant une ou plusieurs routes et/ou un ou plusieurs canaux virtuels pour vérifier la bonne réaction du réseau, ce qui rend ce test « apte à tester le réseau en conditions extrêmes ».

De préférence, le procédé de génération et de contrôle de trafic de test comprend au moins un commutateur de test qui est à la fois commutateur émetteur de test et commutateur destinataire de test, et qui comprend : au moins un port d'entrée ou de sortie de test qui est à la fois un port d'entrée ou de sortie émetteur de test et un port d'entrée ou de sortie destinataire de test, de préférence plusieurs, encore plus de préférence une majorité, et avantageusement la totalité, de ses ports d'entrée ou de sortie de test qui sont à la fois un port d'entrée ou de sortie émetteur de test et un port d'entrée ou de sortie destinataire de test, de préférence plusieurs, encore plus de préférence une majorité, et avantageusement la totalité, de ses commutateurs de test qui sont à la fois commutateur émetteur de test et commutateur destinataire de test. Ainsi, la couverture de détection d'une défaillance au sein du réseau et la précision de la localisation de cette défaillance une fois qu'elle est détectée, sont notablement améliorés.

De préférence, chaque port d'entrée ou de sortie de test, qui est à la fois un port d'entrée ou de sortie émetteur de test et un port d'entrée ou de sortie destinataire de test, comprend à la fois un composant générateur de trafic et un composant contrôleur de trafic. Ainsi, la couverture de détection d'une défaillance au sein du réseau et la précision de la localisation de cette défaillance une fois qu'elle est détectée, sont notablement améliorés.

De préférence, pour un ou plusieurs commutateurs émetteur et/ou destinataire de test, de préférence pour la majorité des commutateurs émetteur et/ou destinataire de test, encore plus de préférence pour la totalité des commutateurs émetteur et/ou destinataire de test : soit la majorité des ports d'entrée, soit la majorité des ports de sortie, sont des ports d'entrée ou de sortie émetteur et/ou destinataire de test, de préférence, soit la totalité des ports d'entrée, soit la totalité des ports de sortie, sont des ports d'entrée ou de sortie émetteur et/ou destinataire de test. Ainsi, la couverture de détection d'une défaillance au sein du réseau et la précision de la localisation de cette défaillance une fois qu'elle est détectée, sont notablement améliorés.

De préférence, la majorité, de préférence la totalité, des commutateurs du réseau de nœuds de calcul, sont des commutateurs émetteur et/ou destinataire de test. Ainsi, la couverture de détection d'une défaillance au sein du réseau et la précision de la localisation de cette défaillance une fois qu'elle est détectée, sont notablement améliorés.

De préférence, pour un ou plusieurs commutateurs émetteur et/ou destinataire de test, de préférence pour la majorité des commutateurs émetteur et/ou destinataire de test, encore plus de préférence pour la totalité des commutateurs émetteur et/ou destinataire de test : la majorité, de préférence la totalité, des ports d'entrée ou de sortie émetteur et/ou destinataire de test, sont des ports de sortie. Ainsi, l'utilisation d'un port de sortie plutôt qu'un port d'entrée pour localiser les composants générateur et/ou contrôleur de trafic de test, rend l'implémentation hardware de ces composants plus simple structurellement. En effet, ces composants peuvent par exemple être ajoutés sous la forme d'une simple entrée supplémentaire dans un multiplexeur (ou d'un autre dispositif d'arbitrage) plutôt que de nécessiter l'ajout d'un multiplexeur (ou d'un autre dispositif d'arbitrage) ou au moins d'un niveau de multiplexage (ou d'arbitrage) là il n'était pas prévu pour la transmission du seul trafic fonctionnel.

De préférence, la sélection, d'une part d'abord du commutateur émetteur de test et puis de son port d'entrée ou de sortie émetteur de test, et d'autre part d'abord du commutateur destinataire de test puis de son port d'entrée ou de sortie destinataire de test, est réalisée en fonction du chemin dans le réseau qui va devoir être testé. Ainsi, lors de cette étape de sélection, le chemin ou la route à tester entre deux ports particuliers de commutateurs peut être choisie. Pourvu que la densification des composants générateur et contrôleur de trafic de test soit suffisamment importante, un grand nombre de routes ou de chemins au travers du réseau peut être testé, et chaque chemin à tester peut être sélectionné par l'utilisateur du procédé de génération et de contrôle de trafic de test.

De préférence, la sélection sélectionne d'une part un seul port d'entrée ou de sortie émetteur de test d'un seul commutateur émetteur de test et d'autre part un seul port d'entrée ou de sortie destinataire de test d'un seul commutateur destinataire de test. Ainsi, un premier scénario, correspondant à l'envoi de trafic de test d'un seul endroit du réseau vers un seul endroit du réseau, peut être réalisé. Ce premier scénario est simple et localise très précisément une défaillance. Il faut toutefois dérouler un nombre notable de ces premiers scénarios pour réaliser une bonne couverture du réseau.

De préférence, la sélection sélectionne d'une part un seul port d'entrée ou de sortie émetteur de test d'un seul commutateur émetteur de test et d'autre part un ou plusieurs ports d'entrée ou de sortie destinataires de test d'un ou de plusieurs commutateurs destinataires de test. Ainsi, un deuxième scénario, correspondant à l'envoi de trafic de test d'un seul endroit du réseau vers plusieurs endroits différents du réseau, peut être réalisé. Ce deuxième scénario est moins simple mais localise également très précisément une défaillance. Il faut toutefois dérouler un nombre moins important de ces deuxièmes scénarios pour réaliser une bonne couverture du réseau.

De préférence, le composant contrôleur de trafic contrôle, au moins si l'adresse du port d'entrée ou de sortie destinataire de test du commutateur destinataire de test atteint par le ou les messages d'un même trafic de test est bonne : l'ordre d'arrivée des messages d'un même trafic de test, l'ordre d'arrivée des parties d'un même message envoyées successivement au cours de la génération et de l'émission d'un même trafic de test. Le nombre de parties (flits ou blocs de base) d'un message à la réception est identique au nombre de parties de ce message à l'émission. Ainsi l'intégrité des données est bien contrôlée. D'une part, l'ordre des messages dans un même trafic de test, et d'autre part, l'ordre et le nombre des blocs de message dans un même message d'un même trafic de test, sont contrôlés. Si une défaillance du réseau avait tendance à intervertir l'ordre des messages d'une communication ou l'ordre des paquets dans un message, au cours du trafic fonctionnel, celle-ci devrait ainsi pouvoir être détectée.

De préférence, la sélection sélectionne d'une part un ou plusieurs ports d'entrée ou de sortie émetteurs de test d'un ou de plusieurs commutateurs émetteurs de test et d'autre part un seul port d'entrée ou de sortie destinataire de test d'un seul commutateur destinataire de test. Ainsi, un troisième scénario, correspondant à l'envoi de trafic de test de plusieurs endroits différents du réseau vers un seul endroit du réseau, peut être réalisé. Ce troisième scénario est moins simple et localise un peu moins précisément une défaillance. Il faut toutefois dérouler un nombre moins important de ces troisièmes scénarios pour réaliser une bonne couverture du réseau.

De préférence, la sélection sélectionne d'une part un ou plusieurs ports d'entrée ou de sortie émetteurs de test d'un ou de plusieurs commutateurs émetteurs de test et d'autre part un ou plusieurs ports d'entrée ou de sortie destinataires de test d'un ou de plusieurs commutateurs destinataires de test. Ainsi, un quatrième scénario, correspondant à l'envoi de trafic de test de plusieurs endroits différents du réseau vers plusieurs endroits différents du réseau, peut être réalisé. Ce quatrième scénario est plus complexe et localise un peu moins précisément une défaillance. Il peut parfois toutefois suffire de dérouler un nombre très limité de ces quatrièmes scénarios pour réaliser une bonne couverture du réseau.

De préférence, le composant contrôleur de trafic : d'abord vérifie si l'adresse du port d'entrée ou de sortie destinataire de test du commutateur destinataire de test atteint par un message de trafic de test est bonne, ensuite, si cette adresse est bonne, contrôle l'intégrité des données de ce message de trafic de test. Ainsi l'intégrité des données est bien contrôlée. D'abord l'adresse du destinataire est vérifiée. Si cette adresse n'est pas la bonne, il y a une défaillance sans qu'il n'y ait besoin de plus ample vérification. Si cette adresse est la bonne, alors d'autres vérifications plus poussées sont réalisées, comme par exemple l'intégrité des données contenues dans le message étant arrivé à bonne destination.

De préférence, au moins une partie du trafic de test, de préférence tout le trafic de test, qui est généré et émis au niveau d'un port de sortie émetteur de test sélectionné d'un commutateur émetteur de test sélectionné, reboucle d'abord par un port d'entrée de ce commutateur émetteur de test sélectionné, avant de quitter ce commutateur émetteur de test sélectionné, pour aller ensuite vers son port d'entrée ou de sortie destinataire de test sélectionné du commutateur destinataire de test sélectionné, soit directement soit indirectement au travers d'un ou de plusieurs autres commutateurs du réseau. Ainsi, avant même de vérifier la présence ou l'absence de défaillance sur le chemin entre deux commutateurs, respectivement émetteur et destinataire, la présence ou l'absence de défaillance au niveau du commutateur émetteur est vérifiée.

De préférence, le trafic de test généré comprend un ou plusieurs messages, le message ou chaque message comprenant un indicateur de trafic de test spécifiant s'il appartient à un trafic de test ou au trafic fonctionnel, le message ou le dernier message comprenant un indicateur de fin de trafic de test spécifiant la fin du trafic de test en cours, cet indicateur de fin de trafic de test en cours déclenchant la réinitialisation de l'état du ou des composants contrôleurs de trafic du ou des ports d'entrée ou de sortie destinataires du test en cours. Ainsi, les messages d'un trafic de test sont marqués. D'abord, chaque message du trafic de test est marqué d'une manière à indiquer la fin de ce message de trafic de test. Ensuite, le dernier message du trafic de test est marqué d'une manière à indiquer la fin de l'ensemble de ce trafic de test. De cette manière le composant contrôleur de trafic de test sait toujours où il en est, c'est-à-dire au niveau de quelle phase du trafic de test il se trouve, notamment pour pouvoir se réinitialiser en fin de trafic de test, ce qui économise notamment l'envoi d'un message spécifique de réinitialisation en fin de trafic de test.

De préférence, les différents messages successifs d'un même trafic de test, cheminant sur un même canal physique, cheminent tous sur un même canal virtuel associé à ce canal physique. Dans une première option, le canal virtuel d'un canal physique est choisi de manière fixe, c'est toujours le même canal virtuel qui est choisi. Le test est ainsi simple et maîtrisé. Le test est toutefois moins riche, car il n'explore pas les défaillances potentielles des autres canaux virtuels associés à ce canal physique.

De préférence, les différents messages successifs d'un même trafic de test, cheminant sur un même canal physique, cheminent sur différents canaux virtuels associés à ce canal physique, le canal virtuel de chaque nouveau message étant choisi aléatoirement. Dans une deuxième option, le canal virtuel d'un canal physique est choisi de manière aléatoire, c'est jamais (ou presque jamais) le même canal virtuel qui est choisi, et on ne sait pas quel est le prochain canal qui va être choisi. Le test est ainsi complet. Le test est toutefois un peu plus complexe et un peu moins bien maîtrisé, car on ne sait pas comment le ou les prochains canaux virtuels vont être choisis.

De préférence, les différents messages successifs d'un même trafic de test, cheminant sur un même canal physique, cheminent sur différents canaux virtuels associés à ce canal physique, le canal virtuel de chaque nouveau message étant incrémenté à chaque fois. Dans une troisième option, le canal virtuel d'un canal physique est choisi de manière incrémentale, c'est jamais (ou presque jamais) le même canal virtuel qui est choisi, mais on peut prédire quel va être le prochain canal virtuel choisi. Le test est ainsi maîtrisé et complet. Le test est toutefois un peu plus complexe à gérer.

De préférence, la proportion de bande passante disponible à l'origine pour la génération et l'émission du trafic de test est paramétrable par l'utilisateur du procédé de génération et de contrôle, de préférence de 0% à 100%, le niveau de priorité du trafic de test, par rapport à tout ou partie du trafic fonctionnel, est paramétrable par l'utilisateur du procédé de génération et de contrôle, depuis la plus haute priorité jusqu'à la plus basse priorité, en passant par une ou plusieurs priorités intermédiaires. Ainsi, l'impact du trafic de test, notamment sur un trafic fonctionnel en cours, peut être mieux maîtrisé. D'une part, le niveau de ressources requises peut être paramétré, par l'intermédiaire d'un paramétrage de la bande passante à priori utilisable. D'autre part, la criticité de l'utilisation des ressources requises peut également être paramétrée, par l'intermédiaire d'un paramétrage du niveau de priorité du trafic de test par rapport au trafic fonctionnel, de manière à rendre le trafic de test moins intrusif et à vérifier que le trafic de test ne risque pas de trop dégrader ou perturber le trafic fonctionnel, voire à empêcher tout simplement que le trafic de test puisse bloquer le trafic fonctionnel et planter le réseau au cours d'une grande et longue tâche de calcul, laquelle devrait alors être relancée en tout ou partie, entraînant une lourde perte d'efficacité pour l'ensemble du réseau. Dans une alternative, on peut laisser tout le trafic fonctionnel prioritaire et ne laisser passer le trafic de test, moins prioritaire, que dans la partie de la bande passante laissée libre par le trafic fonctionnel prioritaire, remplissant, avec du trafic de test moins prioritaire, alors soit tout soit partie, de cette bande passante laissée libre par le trafic fonctionnel prioritaire.

De préférence, le composant contrôleur de trafic de test comprend un registre de statut qui stocke, pour le trafic de test qu'il contrôle, le cas échéant : une erreur de réception, le numéro du premier message en erreur, le numéro de la première partie d'un message en erreur, l'adresse d'émission, ce registre de statut indiquant si un trafic de test est en cours ou non. Ce registre de statut est représentatif des résultats du test. Il suffit donc de le consulter pour déterminer la présence ou l'absence d'une défaillance, pour pouvoir localiser celle-ci précisément, et avoir des renseignements complémentaires sur la nature de cette défaillance.

De préférence, le port d'entrée ou de sortie d'un commutateur de réseau de nœuds de calcul, selon l'invention, comprend : un identifiant dans un réseau, un composant générateur de trafic de test auquel est affecté le même identifiant, et/ou un composant contrôleur de trafic de test auquel est affecté le même identifiant. Ainsi, les composants générateur et/ou contrôleur de trafic de test peuvent être implémentés largement dans le réseau, au niveau de la majorité ou même de la totalité des commutateurs du réseau, avec une perturbation du réseau minimisée, en particulier sans modifier le contenu des tables de routage situées au niveau des commutateurs des réseaux.

De préférence, le port d'entrée ou de sortie d'un commutateur de réseau de nœuds de calcul selon l'invention est un port de sortie. Ainsi, l'utilisation d'un port de sortie plutôt qu'un port d'entrée pour localiser les composants générateur et/ou contrôleur de trafic de test, rend l'implémentation hardware de ces composants plus simple structurellement. En effet, ces composants peuvent par exemple être ajoutés sous la forme d'une simple entrée supplémentaire dans un multiplexeur plutôt que de nécessiter l'ajout d'un multiplexeur ou au moins d'un niveau de multiplexage là il n'était pas prévu pour la transmission du seul trafic fonctionnel.

De préférence, le bloc d'arbitrage entre lesdites entrées est un multiplexeur, le composant contrôleur de trafic est situé juste en sortie de ce multiplexeur. Ainsi, l'implémentation du composant contrôleur de sortie juste à la sortie du multiplexeur rend l'opération de contrôle plus simple et plus facile, puisque les paquets ou les blocs de paquet à contrôler sont « bruts », et non pas « encapsulés » dans des formats particuliers leur permettant d'être intégrés dans la structure des messages, que ce soient les messages qui viennent d'être reçus ou ceux qui vont être envoyés.

De préférence, le commutateur comprend : une matrice de commutation reliant au moins plusieurs dizaines de ports d'entrée à au moins plusieurs dizaines de ports de sortie, en amont de chaque port d'entrée se trouvant successivement au moins une paire de câbles d'entrée, un déserialiseur, un bloc de protocole de réception désencapsulant les paquets de message en blocs de base, en aval de chaque port de sortie se trouvant successivement un bloc de protocole de transmission encapsulant les blocs de base en paquets de message, un sérialiseur, au moins une paire de câbles de sortie. Ainsi, le procédé de génération et de contrôle de trafic de test peut être réalisé de manière simple et efficace, même entre deux commutateurs de structure sophistiquée.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple de commutateur comprenant plusieurs ports de sortie implémentant un composant générateur de trafic de test et un composant contrôleur de trafic de test selon un mode de réalisation de l'invention.
La figure 2 représente schématiquement un exemple de port de sortie implémentant un composant générateur de trafic de test et un composant contrôleur de trafic de test selon un mode de réalisation de l'invention.
La figure 3 représente schématiquement un exemple global de circulation de trafic de test d'un commutateur émetteur à un commutateur destinataire en passant par un commutateur intermédiaire selon un mode de réalisation de l'invention.
La figure 4 représente schématiquement un exemple détaillé de circulation de trafic de test d'un commutateur émetteur à un commutateur destinataire en passant par un commutateur intermédiaire selon un mode de réalisation de l'invention.
La figure 5 représente schématiquement un exemple de structure d'un premier bloc de base de message d'un message d'un trafic de test selon un mode de réalisation de l'invention.
La figure 6 représente schématiquement un exemple de structure d'un bloc de base de message suivant d'un message d'un trafic de test selon un mode de réalisation de l'invention.

### DESCRIPTION DETAILLEE DE L'INVENTION

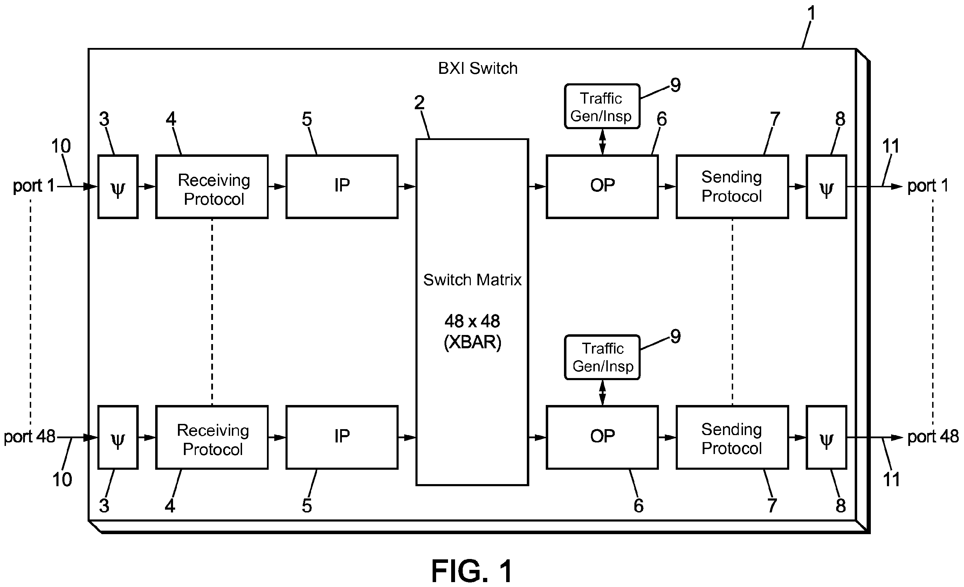

La figure 1 représente schématiquement un exemple de commutateur comprenant plusieurs ports de sortie implémentant un composant générateur de trafic de test et un composant contrôleur de trafic de test selon un mode de réalisation de l'invention.

Le commutateur 1 comprend une matrice de commutation 2 reliant 48 ports d'entrée 5 à 48 ports de sortie 6. En amont de chaque port d'entrée 5 se trouvent successivement, dans le sens amont aval, une ou deux paires de câbles d'entrée 10 sur lesquelles arrive des signaux électriques, un déserialiseur 3 (ou bloc de dé-sérialisation 3) mettant en parallèle les signaux reçus en série, un bloc de protocole de réception 4 désencapsulant les paquets de message en blocs de base. En aval de chaque port de sortie 6 se trouvent successivement, dans le sens amont aval, un bloc de protocole de transmission 7 encapsulant les blocs de base en paquets de message, un sérialiseur 8 (ou bloc de sérialisation 8) mettant en série les signaux reçus en parallèle, une ou deux paires de câbles de sortie 11 sur lesquelles sont émis des signaux électriques. Au niveau de chaque port de sortie 6 est ajouté un dispositif de génération et de contrôle 9 de trafic de test lequel peut d'une part générer et ajouter du trafic de test au trafic de fonctionnement et d'autre part extraire, hors du trafic de fonctionnement auquel il est mêlé, le trafic de test à contrôler.

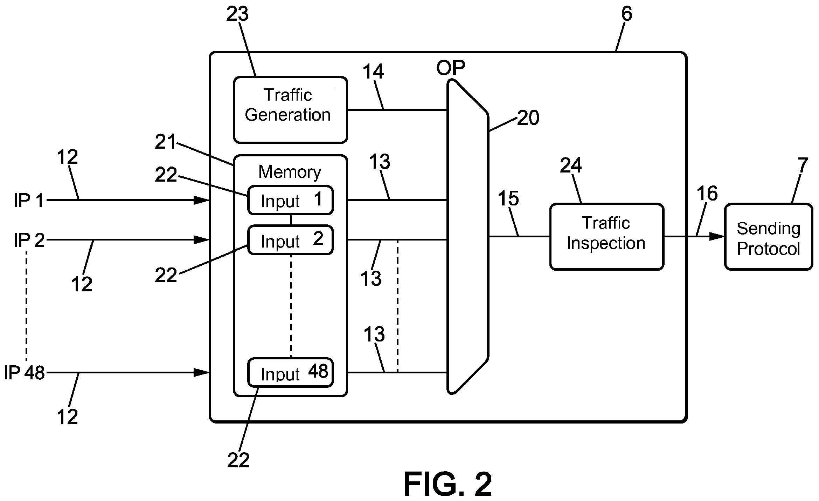

La figure 2 représente schématiquement un exemple de port de sortie implémentant un composant générateur de trafic de test et un composant contrôleur de trafic de test selon un mode de réalisation de l'invention.

Le port de sortie 6 va multiplexer des entrées 12 en provenance respective des 48 ports d'entrée 5 après avoir traversé la matrice de commutation 2, sur une sortie 16 à destination du bloc de protocole de transmission 7 encapsulant les blocs de base en paquets de message. Le port de sortie 6 comprend un multiplexeur 20. Les blocs de message en provenance des entrées 12 sont respectivement stockées sur des queues 22 d'une mémoire 21, une queue 22 par entrée 12, avant d'être envoyées respectivement sur les entrées 13 du multiplexeur 20 lequel sélectionne et ordonne l'un après l'autre les blocs de message pour les envoyer sur sa sortie 15. Un composant générateur 23 de trafic de test génère du trafic de test en plus du trafic fonctionnel issu des entrées 12 en provenance respective des 48 ports d'entrée 5. Une fois généré, ce trafic de test est envoyé sur une 49^{ième} entrée supplémentaire 14 du multiplexeur 20 et traitée en fonction de sa priorité relative par rapport aux autres entrées 13 ainsi qu'en fonction de la charge, c'est-à-dire de la proportion utilisée de la bande passante disponible. Le composant générateur 23 de trafic de test est configuré comme une entrée supplémentaire du multiplexeur 20, et donc comme une entrée supplémentaire du port de sortie 6. En sortie du multiplexeur 20, se trouve un composant contrôleur 24 de trafic de test lequel va extraire et contrôler le trafic de test qui est sur la sortie 15 du multiplexeur 20 et qui était destiné au port de sortie 6 dans lequel il se trouve. Le trafic fonctionnel, comme le trafic de test qui n'est pas destiné au port de sortie 6, traverse directement le composant contrôleur 24 de trafic de test pour arriver sur la sortie 16 du port de sortie 6.

Le composant générateur 23 de trafic de test a pour fonction principale de générer du trafic de test, seul ou mêlé avec le trafic fonctionnel. Tous les paramètres du trafic de test généré sont avantageusement réglables par des registres de configuration. Il y a un composant générateur 23 de trafic de test par port de sortie 6, le composant générateur 23 de trafic étant considéré comme un port d'entrée supplémentaire par le mécanisme d'arbitration 20 de port de sortie 6 lequel est avantageusement un multiplexeur 20. Le composant générateur 23 de trafic de test génère une série de messages composés de blocs de message, c'est-à-dire de « flits », d'une taille de 32 octets par exemple. La longueur des messages peut être soit aléatoire, soit définie par un registre de configuration.

Pour chaque message envoyé par le composant générateur 23 de trafic de test sur un canal physique, le canal virtuel pourra être sélectionné de différentes façons. Le canal virtuel peut être fixe, c'est-à-dire que c'est toujours le même canal virtuel qui est utilisé. Le canal virtuel peut être aléatoire, c'est-à-dire que le canal virtuel est choisi au hasard pour chaque nouveau message. Le canal virtuel peut être incrémental, c'est-à-dire que le numéro du canal virtuel est incrémenté à chaque fois qu'un nouveau message est envoyé, de sorte que tous les canaux virtuels d'un même canal physique sont utilisés successivement l'un après l'autre.

Le nombre de messages envoyé peut être soit fixe, c'est-à-dire que le nombre maximum de messages à envoyer est défini par des registres de configuration, soit aléatoire, c'est-à-dire qu'il est choisi au hasard et peut varier d'un trafic de test donné au trafic de test suivant. La bande passante utilisée peut être programmée de 0% à 100%, c'est-à-dire que le composant générateur 23 de trafic de test peut générer et émettre sur une proportion de bande passante allant de 0% à 100%, étant entendu que son niveau de priorité lui permet ou non de passer avant tel ou tel autre message du trafic fonctionnel arrivant simultanément sur une entrée du multiplexeur 20.

Le composant contrôleur 24 de trafic de test a pour fonction principale de vérifier et de filtrer le trafic de test lorsque la destination souhaitée du message est atteinte, mais par contre de le laisser se propager comme du trafic fonctionnel lorsque la destination souhaitée n'est pas encore atteinte. Un composant contrôleur 24 de trafic de test est implémenté dans chaque port de sortie 6.

Dans une première situation, le trafic de test est généré d'un endroit unique du réseau vers un autre endroit unique du réseau. Comme pour les messages fonctionnels, l'intégrité des données est vérifiée sur tout le parcours des messages, ce qui permet de remonter une erreur locale en cas de problème de fiabilité d'un lien ou d'une mémoire par exemple. Le composant contrôleur 24 de trafic de test va vérifier la correspondance de destination en vérifiant si l'identifiant de destination du trafic de test correspond à l'identifiant du port de sortie auquel il est rattaché. Si c'est le cas, cela signifie que le trafic généré a atteint la destination désirée, le trafic sera ensuite vérifié et filtré. Si l'identifiant de destination transporté dans le trafic généré ne correspond pas à l'identifiant du port de sortie auquel le composant contrôleur 24 de trafic de test est rattaché, le trafic ne sera pas vérifié et ne sera pas non plus filtré par le composant contrôleur 24 de trafic de test. Le composant contrôleur 24 de trafic de test vérifie que les « flits » ou blocs de base de message arrivent bien dans leur ordre d'émission. Le composant contrôleur 24 de trafic de test vérifie également que les messages arrivent dans leur ordre d'émission.

Dans une deuxième situation, le trafic de test est généré de plusieurs endroits différents dans le réseau vers un autre endroit unique du réseau. Dans ce cas, le trafic de test est intercepté, mais sans autres vérifications que l'intégrité des données et que la correspondance de destination.

Tout d'abord, concernant la vérification de l'intégrité des données, comme pour les messages fonctionnels, l'intégrité des données est vérifiée sur tout le parcours des messages, ce qui permet de remonter une erreur locale en cas de problème de fiabilité d'un lien ou d'une mémoire par exemple.

Ensuite, concernant la correspondance de destination, le composant contrôleur 24 de trafic de test vérifie si l'identifiant de destination correspond à l'identifiant du port de sortie auquel il est rattaché. Si c'est le cas, cela signifie que le trafic généré a atteint la destination désirée, le trafic sera ensuite vérifié et filtré par ce composant contrôleur 24 de trafic de test. Si l'identifiant de destination transporté dans le trafic généré ne correspond pas l'identifiant du port de sortie auquel le composant contrôleur 24 de trafic de test est rattaché, le trafic de test ne sera pas vérifié et ne sera pas non plus filtré par le composant contrôleur 24 de trafic de test qui le laissera passer. La différence essentielle entre cette deuxième situation et la première situation décrite précédemment, est que le composant contrôleur 24 de trafic de test ne vérifie pas l'ordre d'arrivée blocs de base de message entre eux ni l'ordre d'arrivée entre eux des messages reçus. Une éventuelle interversion de deux blocs de message entre eux ou bien de deux messages entre eux ne sera pas ici détectée.

En résumé, si l'indicateur de trafic de test est à 1, c'est-à-dire si cela correspond à du trafic de test, au contraire du trafic fonctionnel dont l'indicateur de trafic de test est à 0, et si l'identifiant de destination correspond à l'identifiant du port de sortie auquel le composant contrôleur 24 de trafic de test est rattaché, alors le bloc de base de message est vérifié et filtré par le composant contrôleur 24 de trafic de test. Cette opération de vérification est réalisée indépendamment pour chaque canal virtuel associé à un même canal physique.

Le registre de statut du composant contrôleur 24 de trafic de test contient plusieurs informations utiles pour évaluer la fiabilité des interconnexions entre commutateurs du réseau, parmi lesquelles :
➢ un indicateur permettant de savoir si un trafic de test généré est en cours ou non,
➢ pour le trafic de test reçu :
   ∘ un identifiant de la source d'émission de ce trafic de test sur 16 bits contenant le champ identifiant de la source contenue dans le dernier bloc de base de message reçu,
   o un identifiant de la destination de ce trafic de test sur 16 bits contenant le champ identifiant de la destination contenue dans le dernier bloc de base de message intercepté,
   o un compteur de blocs de message, sur 27 bits par canal virtuel, contenant le numéro du dernier bloc de base de message reçu ; si une erreur est détectée, il contient le numéro du premier bloc de base de message en erreur,
   o un compteur de messages, sur 32 bits, contenant le numéro du dernier message reçu ; si une erreur est détectée, ce registre contient le numéro du premier message en erreur,
   o une éventuelle erreur de réception.

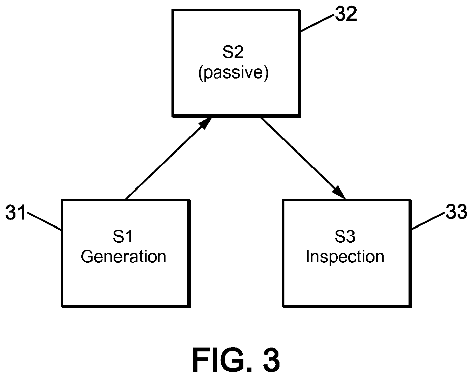

La figure 3 représente schématiquement un exemple global de circulation de trafic de test d'un commutateur émetteur à un commutateur destinataire en passant par un commutateur intermédiaire selon un mode de réalisation de l'invention. Le réseau est par exemple un réseau à topologie en arbre large (« fat-tree » en langue anglaise).

Un trafic de test est généré au niveau d'un premier commutateur émetteur de test 31 à destination d'un troisième commutateur destinataire de test 33 en passant par un deuxième commutateur intermédiaire 32. Le sens de circulation du trafic de test est donné par le sens des doubles flèches. Au niveau de chaque commutateur du réseau, 31, 32 ou 33, ici au niveau du commutateur 31 émetteur de trafic de test, du trafic de test doit pouvoir être généré indépendamment du trafic fonctionnel et en plus du trafic fonctionnel. Au niveau de chaque commutateur du réseau, 31, 32 ou 33, ici au niveau du commutateur destinataire de trafic de test, du trafic de test doit pouvoir être contrôlé en étant extrait du trafic fonctionnel.

Ce trafic de test peut être généré seul, ou mêlé avec du trafic fonctionnel, et dans ce dernier cas, ce trafic de test est considéré comme une entrée supplémentaire de test par rapport aux autre entrées fonctionnelles c'est-à-dire fournissant du trafic fonctionnel. Plusieurs scénarios sont envisageables. Dans un scénario, du trafic de test peut être généré et contrôlé en interne dans le même commutateur à l'aide d'un re-bouclage interne, par exemple du trafic de test généré au niveau du commutateur 31 et qui serait à destination du même commutateur 31. Dans un autre scénario, du trafic de test peut être généré au niveau d'un commutateur émetteur comme le commutateur 31, puis envoyé à travers plusieurs commutateurs, comme le commutateur intermédiaire 32, pour atteindre la destination finale qui serait le commutateur destinataire 33.

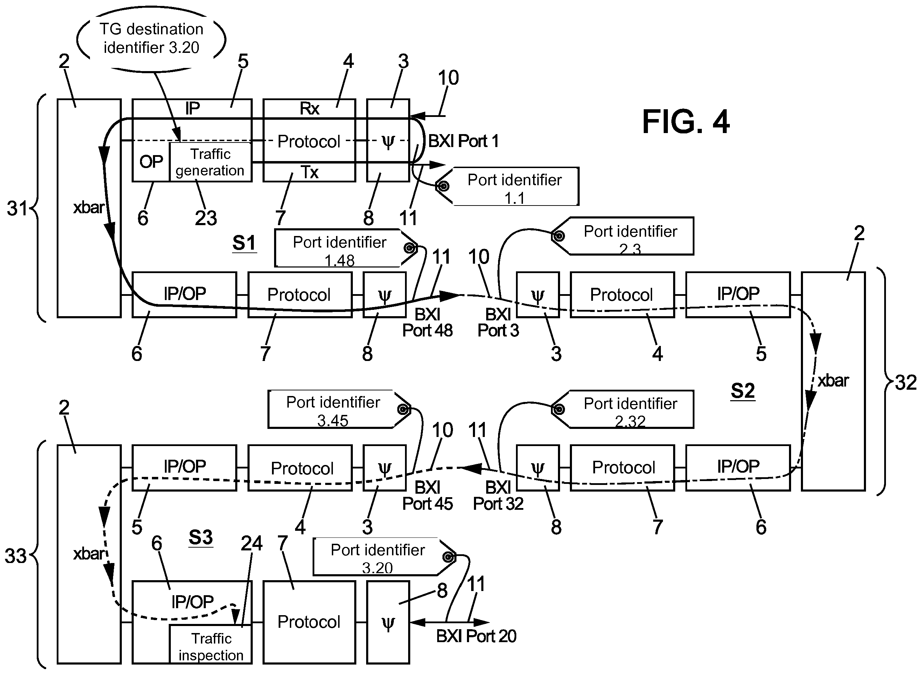

La figure 4 représente schématiquement un exemple détaillé de circulation de trafic de test d'un commutateur émetteur à un commutateur destinataire en passant par un commutateur intermédiaire selon un mode de réalisation de l'invention.

Les tables de routage dans les ports d'entrée 5 des commutateurs 31 à 33 permettant d'acheminer les messages dans les commutateurs sont mises à jour par logiciel. Toutes les entrées utiles des tables de routage seront configurées. Chaque port d'entrée 5 doit avoir un identifiant unique qui permet d'abord de tracer le port d'envoi, puis de tracer le port de réception, et enfin de trouver la destination du trafic en faisant correspondre l'entrée de la table de routage à l'identifiant du port de destination. Tous les registres de configuration sont mis à jour par logiciel en fonction de la topologie du réseau. Le trafic de test généré est filtré dans le port de destination 6 par le composant contrôleur 24 de trafic de test.

Plusieurs scénarios sont envisageables. Un premier scénario, dit « 1 vers 1 », prévoit que chaque destination reçoit le trafic d'une source unique et vice versa. Le contenu des en-têtes des paquets sont suffisants pour effectuer l'auto-vérification des messages reçus. Un deuxième scénario, dit « N vers 1 » prévoit qu'un trafic 1 vers 1 est généré séquentiellement à partir de N sources différentes vers la même destination. Un troisième scénario, dit « 1 vers N » prévoit qu'un trafic 1 vers 1 est généré séquentiellement depuis la même source vers N destinations différentes. Un quatrième scénario, dit « N vers N » prévoit de mixer le trafic des deuxième et troisième scénarios précédemment décrits.

Chaque port d'entrée 5 et chaque port de sortie 6 de chaque commutateur 31 à 33 possède son propre identifiant, qui associe un numéro de commutateur à un numéro de port. Chacun de ces ports 5 ou 6 sera accessible par un identifiant de destination dédié. La table de routage de chaque port d'entrée 5 est configurée en fonction de la topologie du réseau. Tous les composants contrôleurs 24 de trafic de test, sur le chemin du trafic en cours, vérifient si l'identifiant de destination transmis dans le message est identique à l'identificateur du port qui leur est associé. Si c'est le cas, cela signifie que le message a bien atteint la destination finale et qu'il sera filtré. Si ce n'est pas le cas, le message est simplement transféré.

Un exemple précis de cheminement d'un message d'un trafic de test partant du commutateur émetteur 31, traversant le commutateur intermédiaire 32, et arrivant au commutateur destinataire 33, va maintenant être décrit en liaison avec la figure 4. Un identifiant 1.N correspond au port N du commutateur émetteur 31. Un identifiant 2.N correspond au port N du commutateur intermédiaire 32. Un identifiant 3.N correspond au port N du commutateur destinataire 33.

Le trafic est généré à partir du port de sortie 6 ayant le numéro 1 du commutateur émetteur 31.

Le port de sortie 6 ayant le numéro 1 dans le commutateur émetteur 31 est rebouclé sur lui-même, le trafic revient donc sur le port d'entrée 5 ayant le numéro 1 dans le commutateur émetteur 31.

La table de routage du port d'entrée 5 ayant le numéro 1 dans le commutateur émetteur 31 est lue avec l'entrée 3.20 laquelle correspond à la destination finale des messages générés dans ce trafic de test. La destination lue dans la table de routage est le port de sortie 6 ayant le numéro 48 dans le commutateur émetteur 31.

Dans le port de sortie 6 ayant le numéro 48 dans le commutateur émetteur 31, le composant contrôleur 24 de trafic de test (non représenté sur la figure 4) vérifie que les identifiants de destination et du port de sortie 6 ayant le numéro 48 dans le commutateur émetteur 31 ne sont pas égaux, ces identifiants étant respectivement 3.20 et 1.48.

Le trafic de test sort du port de sortie 6 ayant le numéro 48 dans le commutateur émetteur 31 et passe au port d'entrée 5 ayant le numéro 3 dans le commutateur intermédiaire 32 en suivant simplement le câblage les reliant entre eux.

La table de routage du port d'entrée 5 ayant le numéro 3 dans le commutateur intermédiaire 32 est lue avec l'entrée 3.20 correspondant à la destination finale des messages générés dans ce trafic de test. La destination lue est le port de sortie 6 ayant le numéro 32 dans le commutateur intermédiaire 32.

Dans le port de sortie 6 ayant le numéro 32 dans le commutateur intermédiaire 32, le composant contrôleur 24 de trafic de test (non représenté sur la figure 4) vérifie que les identifiants de destination et du port ne sont pas égaux, ces identifiants étant respectivement 3.20 et 2.32.

Le trafic sort du port de sortie 6 ayant le numéro 32 dans le commutateur intermédiaire 32 et passe au port d'entrée 5 ayant le numéro 45 dans le commutateur destinataire 33.

La table de routage du port d'entrée 5 ayant le numéro 45 dans le commutateur destinataire 33 est lue avec l'entrée 3.20 correspondant à la destination finale des messages générés dans ce trafic de test. La destination lue est le port de sortie 6 ayant le numéro 20 dans le commutateur destinataire 33.

Dans le port de sortie 6 ayant le numéro 20 dans le commutateur destinataire 33, le composant contrôleur 24 de trafic de test (représenté sur la figure 4) vérifie que les identifiants de destination et du port sont égaux, ici un seul et même identifiant 3.20. Le trafic de test, parvenu à destination, est alors extrait par le composant contrôleur 24 de trafic de test et il est contrôlé.

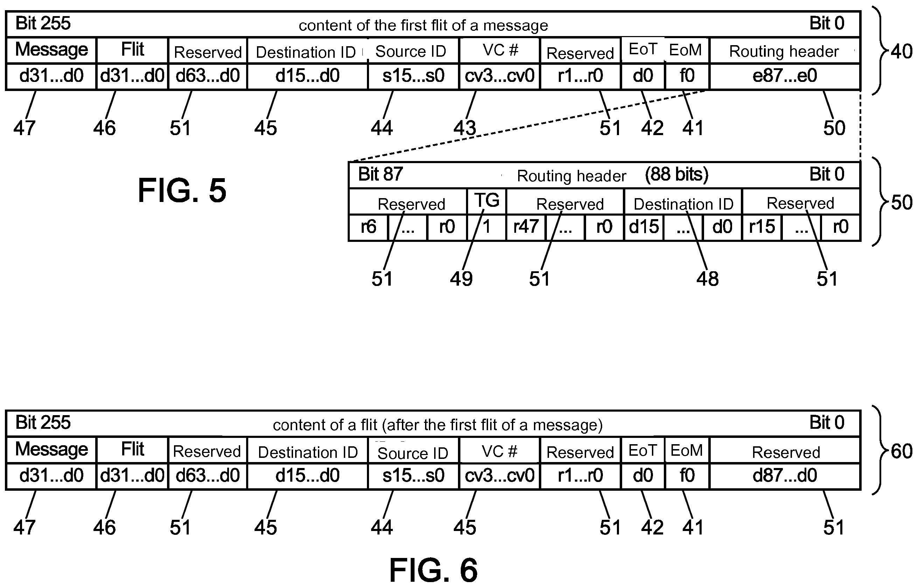

La figure 5 représente schématiquement un exemple de structure d'un premier bloc de base de message d'un message d'un trafic de test selon un mode de réalisation de l'invention.

Le bloc de base du message, encore appelé « flit », est l'unité de base d'un message, sa taille est de 256 bits. Différentes zones réservées 51 correspondent à des zones qui peuvent être remplies de bits aléatoirement, car elles ne sont pas utilisées dans la gestion du trafic de test, ces zones n'ont donc pas vraiment d'intérêt pour le trafic de test.

Pour tous les messages, que ce soient des messages fonctionnels ou bien des messages de test générés, les informations nécessaires au routage sont contenues dans l'entête de routage 50 du premier bloc de base 40. Cet entête de routage 50 n'est présent que dans le premier bloc de base 40 de chaque message et pas dans les blocs de base suivants de ce message.

L'entête de routage 50 comprend un identifiant de destination 48 codé sur 16 bits et qui correspond à l'adresse de la destination finale.

La destination finale est un composant contrôleur de trafic de test dans le cas du trafic généré.

La destination est un contrôleur d'interface réseau, encore appelé terminal de calcul, (« NIC » pour « Network Interface Controller » en langue anglaise), dans le cas du trafic fonctionnel.

L'entête de routage 50 comprend un indicateur 49 de trafic de test généré sur 1 bit, qui vaut TG=1 si le message correspond à du trafic de test généré et qui vaut TG=0 si le message correspond à du trafic fonctionnel.

Tous les blocs de base d'un message de trafic de test généré contiennent des informations nécessaires au composant contrôleur de trafic de test, comme par exemple :
➢ un indicateur de fin de message 41 codé sur 1 bit, indiquant lorsqu'il vaut 1 que le bloc de base correspondant est le dernier bloc de base de ce message ; cet indicateur de fin de message 41 est utilisé pour incrémenter le compteur de message du composant contrôleur de trafic de test,
➢ un indicateur de fin de trafic de test 42, codé sur 1 bit, indiquant la fin du trafic de test lorsqu'il vaut 1, un message de fin de trafic de test étant envoyé sur tous les canaux virtuels lorsque le composant générateur de trafic de test a terminé son émission,
➢ un numéro de canal virtuel 43, codé sur 4 bits: indiquant sur quel canal virtuel le message a été envoyé,
➢ un identifiant de source 44, codé sur 16 bits, indiquant l'adresse du composant générateur de trafic ayant émis le message,
➢ un identifiant de destination 45, codé sur 16 bits, indiquant l'adresse du composant contrôleur de trafic de test à qui le message est destiné,
➢ un numéro de bloc de base de message 46, codé sur 32 bits, indiquant le numéro du bloc de base de message reçu, permettant ainsi de vérifier que les blocs de base d'un même message arrivent bien dans le bon ordre, c'est-à-dire dans leur ordre d'émission,
➢ un numéro de message 47, codé sur 32 bits, indiquant le numéro du message reçu, permettant ainsi de vérifier que les messages circulant sur un même canal virtuel dans un même trafic de test arrivent bien dans le bon ordre, c'est-à-dire dans leur ordre d'émission.

La figure 6 représente schématiquement un exemple de structure d'un bloc de base de message suivant d'un message d'un trafic de test selon un mode de réalisation de l'invention.

Le bloc de base de message 60 est identique au bloc de base de message 40 représenté sur la figure 5 à une différence près, l'entête 50 du bloc de base de message 40 a été remplacée par une zone réservée 51 qui peut être remplie de bits aléatoirement, car elle ne sera pas utilisée par la gestion du trafic de test.

## Revendications

1. Procédé de génération, au niveau de commutateurs émetteurs (1, 31) de test d'un réseau de nœuds de calcul, d'un trafic de test, et de contrôle, au niveau de commutateurs destinataires (1, 33) de test de ce réseau, de ce trafic de test, comprenant :
➢ la possibilité de génération et d'émission, au niveau de chaque port d'entrée (5) ou de sortie (6) émetteur de test de chaque commutateur émetteur (1, 31) de test, d'un trafic de test, à destination de n'importe quel port d'entrée (5) ou de sortie (6) destinataire de test de n'importe quel commutateur destinataire (1, 33) de test,
➢ la sélection d'au moins un port d'entrée (5) ou de sortie (6) émetteur de test d'un commutateur émetteur (1, 31) de test et d'au moins un port d'entrée (5) ou de sortie (6) destinataire de test d'un commutateur destinataire (1, 33) de test,
➢ la génération et l'émission, au moins au niveau d'un port d'entrée (5) ou de sortie (6) émetteur de test sélectionné d'un commutateur émetteur (1, 31) de test sélectionné, d'un trafic de test, à destination au moins d'un port d'entrée (5) ou de sortie (6) destinataire de test sélectionné d'un commutateur destinataire (1, 33) de test sélectionné,
➢ ledit trafic de test étant généré et émis par un composant générateur (23) de trafic configuré comme une entrée supplémentaire (14) dudit port d'entrée (5) ou de sortie (6) émetteur de test sélectionné,
➢ ledit trafic de test étant contrôlé par un composant contrôleur (24) de trafic configuré pour filtrer la sortie (15) dudit port d'entrée (5) ou de sortie (6) destinataire de test sélectionné.

2. Procédé de génération et de contrôle de trafic de test selon la revendication 1, **caractérisé en ce que** chaque port d'entrée (5) ou de sortie (6) émetteur de test de chaque commutateur (1, 31) émetteur de test comporte un composant générateur (23) de trafic de test qui lui est dédié,
et/ou **en ce que** chaque port d'entrée (5) ou de sortie (6) destinataire de test de chaque commutateur destinataire (1, 33) de test comporte un composant contrôleur (24) de trafic de test qui lui est dédié.

3. Procédé de génération et de contrôle de trafic de test selon l'une quelconque des revendications précédentes, **caractérisé en ce que** la génération, au niveau d'au moins un commutateur émetteur (1, 31) de test, d'un trafic de test, et le contrôle, au niveau d'au moins un commutateur destinataire (1, 33) de test, de ce trafic de test, sont réalisés en supplément du trafic fonctionnel de ce réseau de nœuds de calcul.

4. Procédé de génération et de contrôle de trafic de test selon l'une quelconque des revendications précédentes, **caractérisé en ce que** :
➢ à chaque composant générateur (23) de trafic de test est affecté le même identifiant que l'identifiant du port d'entrée (5) ou de sortie (6) émetteur de test du commutateur émetteur (1, 31) de test auquel ce composant générateur (23) est dédié,
➢ et/ou à chaque composant contrôleur (24) de trafic de test est affecté le même identifiant que l'identifiant du port d'entrée (5) ou de sortie (6) destinataire de test du commutateur destinataire (1, 33) de test auquel ce composant contrôleur (24) est dédié.

5. Procédé de génération et de contrôle de trafic de test selon l'une quelconque des revendications précédentes, **caractérisé en ce qu'**il comprend :
➢ au moins un commutateur (1, 31, 32, 33) de test qui est à la fois commutateur émetteur (1, 31) de test et commutateur destinataire (1, 33) de test, et qui comprend :
o au moins un port d'entrée (5) ou de sortie (6) de test qui est à la fois un port d'entrée (5) ou de sortie (6) émetteur de test et un port d'entrée (5) ou de sortie (6) destinataire de test,
o de préférence plusieurs, encore plus de préférence une majorité, et avantageusement la totalité, de ses ports d'entrée (5) ou de sortie (6) de test qui sont à la fois un port d'entrée (5) ou de sortie (6) émetteur de test et un port d'entrée (5) ou de sortie (6) destinataire de test,
➢ de préférence plusieurs, encore plus de préférence une majorité, et avantageusement la totalité, de ses commutateurs (1, 31, 32, 33) de test qui sont à la fois commutateur émetteur (1, 31) de test et commutateur destinataire (1, 33) de test,
➢ > et de préférence **en ce que** chaque port d'entrée (5) ou de sortie (6) de test, qui est à la fois un port d'entrée (5) ou de sortie (6) émetteur de test et un port d'entrée (5) ou de sortie (6) destinataire de test, comprend à la fois un composant générateur (23) de trafic et un composant contrôleur (24) de trafic.

6. Procédé de génération et de contrôle de trafic de test selon l'une quelconque des revendications précédentes, **caractérisé en ce que** :
➢ pour un ou plusieurs commutateurs émetteur (1, 31) et/ou destinataire (1, 33) de test, de préférence pour la majorité des commutateurs émetteur (1, 31) et/ou destinataire (1, 33) de test, encore plus de préférence pour la totalité des commutateurs émetteur (1, 31) et/ou destinataire (1, 33) de test :
o soit la majorité des ports d'entrée (5), soit la majorité des ports de sortie (6), sont des ports d'entrée (5) ou de sortie (6) émetteur et/ou destinataire de test,
o de préférence, soit la totalité des ports d'entrée (5), soit la totalité des ports de sortie (6), sont des ports d'entrée (5) ou de sortie (6) émetteur et/ou destinataire de test,
et/ou **en ce que** la majorité, de préférence la totalité, des commutateurs (1, 31, 32, 33) du réseau de nœuds de calcul, sont des commutateurs émetteur (1, 31) et/ou destinataire (1, 33) de test,
et/ou **en ce que** :
➢ pour un ou plusieurs commutateurs émetteur (1, 31) et/ou destinataire (1, 33) de test, de préférence pour la majorité des commutateurs émetteur (1, 31) et/ou destinataire (1, 33) de test, encore plus de préférence pour la totalité des commutateurs émetteur (1, 31) et/ou destinataire (1, 33) de test :
o la majorité, de préférence la totalité, des ports d'entrée (5) ou de sortie (6) émetteur et/ou destinataire de test, sont des ports de sortie (6).

7. Procédé de génération et de contrôle de trafic de test selon l'une quelconque des revendications précédentes, **caractérisé en ce que** la sélection, d'une part d'abord du commutateur émetteur (1, 31) de test et puis de son port d'entrée (5) ou de sortie (6) émetteur de test, et d'autre part d'abord du commutateur destinataire (1, 33) de test puis de son port d'entrée (5) ou de sortie (6) destinataire de test, est réalisée en fonction du chemin dans le réseau qui va devoir être testé.

8. Procédé de génération et de contrôle de trafic de test selon l'une quelconque des revendications précédentes, **caractérisé en ce que** : soit la sélection sélectionne d'une part un seul port d'entrée (5) ou de sortie (6) émetteur de test d'un seul commutateur émetteur (1, 31) de test et d'autre part un seul port d'entrée (5) ou de sortie (6) destinataire de test d'un seul commutateur destinataire (1, 33) de test,
soit la sélection sélectionne d'une part un seul port d'entrée (5) ou de sortie (6) émetteur de test d'un seul commutateur émetteur (1, 31) de test et d'autre part un ou plusieurs ports d'entrée (5) ou de sortie (6) destinataires de test d'un ou de plusieurs commutateurs destinataires (1, 33) de test.

9. Procédé de génération et de contrôle de trafic de test selon la revendication précédente, **caractérisé en ce que** :
➢ le composant contrôleur (24) de trafic contrôle, au moins si l'adresse du port d'entrée (5) ou de sortie (6) destinataire de test du commutateur destinataire (1, 33) de test atteint par le ou les messages d'un même trafic de test est bonne :
o l'ordre d'arrivée des messages d'un même trafic de test,
o l'ordre d'arrivée des parties d'un même message envoyées successivement au cours de la génération et de l'émission d'un même trafic de test.

10. Procédé de génération et de contrôle de trafic de test selon l'une quelconque des revendications précédentes, **caractérisé en ce que** : soit la sélection sélectionne d'une part un ou plusieurs ports d'entrée (5) ou de sortie (6) émetteurs de test d'un ou de plusieurs commutateurs émetteurs (1, 31) de test et d'autre part un seul port d'entrée (5) ou de sortie (6) destinataire de test d'un seul commutateur destinataire (1, 33) de test,
soit la sélection sélectionne d'une part un ou plusieurs ports d'entrée (5) ou de sortie (6) émetteurs de test d'un ou de plusieurs commutateurs émetteurs (1, 31) de test et d'autre part un ou plusieurs ports d'entrée (5) ou de sortie (6) destinataires de test d'un ou de plusieurs commutateurs destinataires (1, 33) de test.

11. Procédé de génération et de contrôle de trafic de test selon l'une quelconque des revendications 6 à 10, **caractérisé en ce que** :
➢ le composant contrôleur (24) de trafic :
o d'abord vérifie si l'adresse du port d'entrée (5) ou de sortie (6) destinataire de test du commutateur destinataire (1, 33) de test atteint par un message de trafic de test est bonne,
o ensuite, si cette adresse est bonne, contrôle l'intégrité des données de ce message de trafic de test.

12. Procédé de génération et de contrôle de trafic de test selon l'une quelconque des revendications précédentes, **caractérisé en ce que** au moins une partie du trafic de test, de préférence tout le trafic de test, qui est généré et émis au niveau d'un port de sortie (6) émetteur de test sélectionné d'un commutateur émetteur (1, 31) de test sélectionné, reboucle d'abord par un port d'entrée (5) de ce commutateur émetteur (1, 31) de test sélectionné, avant de quitter ce commutateur émetteur (1, 31) de test sélectionné, pour aller ensuite vers son port d'entrée (5) ou de sortie (6) destinataire de test sélectionné du commutateur destinataire (1, 33) de test sélectionné, soit directement soit indirectement au travers d'un ou de plusieurs autres commutateurs (1, 32) du réseau.

13. Procédé de génération et de contrôle de trafic de test selon l'une quelconque des revendications précédentes, **caractérisé en ce que** le trafic de test généré comprend un ou plusieurs messages, le message ou chaque message comprenant un indicateur de trafic de test (49) spécifiant s'il appartient à un trafic de test ou au trafic fonctionnel, le message ou le dernier message comprenant un indicateur de fin de trafic de test (42) spécifiant la fin du trafic de test en cours, cet indicateur de fin de trafic de test (42) en cours déclenchant la réinitialisation de l'état du ou des composants contrôleurs (24) de trafic du ou des ports d'entrée (5) ou de sortie (6) destinataires du test en cours.

14. Procédé de génération et de contrôle de trafic de test selon l'une quelconque des revendications précédentes, **caractérisé en ce que** : soit les différents messages successifs d'un même trafic de test, cheminant sur un même canal physique, cheminent tous sur un même canal virtuel associé à ce canal physique,
soit les différents messages successifs d'un même trafic de test, cheminant sur un même canal physique, cheminent sur différents canaux virtuels associés à ce canal physique, le canal virtuel de chaque nouveau message étant choisi aléatoirement,
soit les différents messages successifs d'un même trafic de test, cheminant sur un même canal physique, cheminent sur différents canaux virtuels associés à ce canal physique, le canal virtuel de chaque nouveau message étant incrémenté à chaque fois.

15. Procédé de génération et de contrôle de trafic de test selon l'une quelconque des revendications précédentes, **caractérisé en ce que** :
➢ la proportion de bande passante disponible à l'origine pour la génération et l'émission du trafic de test est paramétrable par l'utilisateur du procédé de génération et de contrôle, de préférence de 0% à 100%,
➢ le niveau de priorité du trafic de test, par rapport à tout ou partie du trafic fonctionnel, est paramétrable par l'utilisateur du procédé de génération et de contrôle, depuis la plus haute priorité jusqu'à la plus basse priorité, en passant par une ou plusieurs priorités intermédiaires.

16. Procédé de génération et de contrôle de trafic de test selon l'une quelconque des revendications précédentes, **caractérisé en ce que** :
➢ le composant contrôleur (24) de trafic de test comprend un registre de statut qui stocke, pour le trafic de test qu'il contrôle, le cas échéant :
o une erreur de réception,
o le numéro du premier message en erreur,
o le numéro de la première partie d'un message en erreur,
o l'adresse d'émission,
➢ ce registre de statut indiquant si un trafic de test est en cours ou non.

## Patentansprüche

1. Verfahren zur Erzeugung von Testverkehr an Test-Sendeschaltern (1, 31) eines Netzes von Rechenknoten, und zur Kontrolle dieses Testverkehrs an Test-Empfangsschaltern (1, 33) dieses Netzes, umfassend:
> die Möglichkeit, an jedem Testsende-Eingangsport (5) oder -Ausgangsport (6) jedes Test-Sendeschalters (1, 31) Testverkehr zu erzeugen und zu senden, gerichtet an jeden beliebigen Testempfänger-Eingangsport (5) oder -Ausgangsport (6) jedes beliebigen Test-Empfängerschalters (1, 33),
> die Auswahl wenigstens eines Testsende-Eingangsports (5) oder -Ausgangsports (6) eines Test-Sendeschalters (1, 31) und wenigstens eines Testempfänger-Eingangsports (5) oder -Ausgangsports (6) eines Test-Empfängerschalters (1, 33),
> die Erzeugung und das Senden von Testverkehr an wenigstens einem ausgewählten Testsende-Eingangsport (5) oder -Ausgangsport (6) eines ausgewählten Test-Sendeschalters (1, 31), gerichtet an wenigstens einen ausgewählten Testempfänger-Eingangsport (5) oder -Ausgangsport (6) eines ausgewählten Test-Empfängerschalters (1, 33),
> wobei der Testverkehr von einer Verkehrserzeugungskomponente (23) erzeugt und gesendet wird, die als zusätzlicher Eingang (14) des ausgewählten Testsende-Eingangsports (5) oder -Ausgangsports (6) ausgebildet ist,
> wobei der Testverkehr von einer Verkehrskontrollkomponente (24) kontrolliert wird, die dazu ausgebildet ist, den Ausgang (15) des ausgewählten Testempfänger-Eingangsports (5) oder -Ausgangsports (6) zu filtern.

2. Verfahren zur Erzeugung und Kontrolle von Testverkehr nach Anspruch 1, **dadurch gekennzeichnet, dass** jeder Testsende-Eingangsport (5) oder -Ausgangsport (6) jedes Test-Sendeschalters (1, 31) eine ihm zugeordnete Erzeugungskomponente (23) von Testverkehr aufweist,
und/oder dass jeder Testempfänger-Eingangsport (5) oder -Ausgangsport (6) jedes Test-Empfängerschalters (1, 33) eine ihm zugeordnete Kontrollkomponente (24) von Testverkehr aufweist.

3. Verfahren zur Erzeugung und Kontrolle von Testverkehr nach einem der vorhergehenden Ansprüche, **dadurch gekennzeichnet, dass** die Erzeugung eines Testverkehrs an wenigstens einem Test-Sendeschalter (1, 31) und die Kontrolle dieses Testverkehrs an wenigstens einem Test-Empfängerschalter (1, 33) zusätzlich zum funktionalen Verkehr dieses Netzes von Rechenknoten durchgeführt werden.

4. Verfahren zur Erzeugung und Kontrolle von Testverkehr nach einem der vorhergehenden Ansprüche, **dadurch gekennzeichnet, dass**:
> jeder Erzeugungskomponente (23) von Testverkehr die gleiche Kennung zugewiesen wird wie die Kennung des Testsende-Eingangsports (5) oder -Ausgangsports (6) des Test-Sendeschalters (1, 31), dem diese Erzeugungskomponente (23) zugeordnet ist,
> und/oder dass jeder Kontrollkomponente (24) von Testverkehr die gleiche Kennung zugewiesen wird wie die Kennung des Testempfänger-Eingangsports (5) oder -Ausgangsports (6) des Test-Empfängerschalters (1, 33), dem diese Kontrollkomponente (24) zugeordnet ist.

5. Verfahren zur Erzeugung und Kontrolle von Testverkehr nach einem der vorhergehenden Ansprüche, **dadurch gekennzeichnet, dass** es umfasst:
> wenigstens einen Testschalter (1, 31, 32, 33), der sowohl Test-Sendeschalter (1, 31) als auch Test-Empfängerschalter (1, 33) ist, und der umfasst:
o wenigstens einen Test-Eingangsport (5) oder -Ausgangsport (6), der sowohl ein Testsende-Eingangsport (5) oder -Ausgangsport (6) als auch ein Testempfänger-Eingangsport (5) oder -Ausgangsport (6) ist,
o bevorzugt mehrere, stärker bevorzugt eine Mehrheit und vorteilhafterweise alle seiner Test-Eingangsports (5) oder -Ausgangsports (6), die sowohl ein Testsende-Eingangsport (5) oder -Ausgangsport (6) als auch ein Testempfänger-Eingangsport (5) oder -Ausgangsport (6) sind,
➢ bevorzugt mehrere, stärker bevorzugt eine Mehrheit und vorteilhafterweise alle seiner Testschalter (1, 31, 32, 33), die sowohl Test-Sendeschalter (1, 31) als auch Test-Empfängerschalter (1, 33) sind,
> und bevorzugt dadurch, dass jeder Test-Eingangsport (5) oder -Ausgangsport (6), der sowohl ein Testsende-Eingangsport (5) oder -Ausgangsport (6) als auch ein Testempfänger-Eingangsport (5) oder -Ausgangsport (6) ist, sowohl eine Verkehrserzeugungskomponente (23) als auch eine Verkehrskontrollkomponente (24) umfasst.

6. Verfahren zur Erzeugung und Kontrolle von Testverkehr nach einem der vorhergehenden Ansprüche, **dadurch gekennzeichnet, dass**:
➢ bei einem oder mehreren Test-Sendeschaltern (1, 31) und/oder Test-Empfängerschaltern (1, 33), bevorzugt bei der Mehrheit der Test-Sendeschalter (1, 31) und/oder Test-Empfängerschalter (1, 33), noch stärker bevorzugt bei allen Test-Sendeschaltern (1, 31) und/oder Test-Empfängerschaltern (1, 33):
o entweder die Mehrheit der Eingangsports (5) oder die Mehrheit der Ausgangsports (6) Testsende- und/oder Testempfänger-Eingangsports (5) oder -Ausgangsports (6) sind,
o bevorzugt entweder alle Eingangsports (5) oder alle Ausgangsports (6) Testsende- und/oder Testempfänger-Eingangsports und/oder -Ausgangsports sind,
und/oder dass die Mehrheit, bevorzugt alle Schalter (1, 31, 32, 33) des Netzes von Rechenknoten Test-Sendeschalter (1, 31) und/oder Test-Empfängerschalter (1, 33) sind,
und/oder dadurch, dass:
> bei einem oder mehreren Test-Sendeschaltern (1, 31) und/oder Test-Empfängerschaltern (1, 33), bevorzugt bei der Mehrheit der Test-Sendeschalter (1, 31) und/oder Test-Empfängerschalter (1, 33), noch stärker bevorzugt bei allen Test-Sendeschaltern (1, 31) und/oder Test-Empfängerschaltern (1, 33):
o die Mehrheit, bevorzugt alle Testsende- und/oder Testempfänger-Eingangsports (5) oder Ausgangsports (6) Ausgangsports (6) sind.

7. Verfahren zur Erzeugung und Kontrolle von Testverkehr nach einem der vorhergehenden Ansprüche, **dadurch gekennzeichnet, dass** die Auswahl einerseits zunächst des Test-Sendeschalters (1, 31) und dann seines Testsende-Eingangsports (5) oder Testsende-Ausgangsports (6), und andererseits zunächst des Test-Empfängerschalters (1, 33) und dann seines Testempfänger-Eingangsports (5) oder Testempfänger-Ausgangsports (6), in Abhängigkeit von dem Pfad im Netz, der getestet werden soll, erstellt wird.

8. Verfahren zur Erzeugung und Kontrolle von Testverkehr nach einem der vorhergehenden Ansprüche, **dadurch gekennzeichnet, dass**: entweder die Auswahl einerseits einen einzelnen Testsende-Eingangsport (5) oder -Ausgangsport (6) eines einzelnen Test-Sendeschalters (1, 31) und andererseits einen einzelnen Testempfänger-Eingangsport (5) oder -Ausgangsport (6) eines Test-Empfängerschalters (1, 33) auswählt,
oder die Auswahl einerseits einen einzelnen Testsende-Eingangsport (5) oder -Ausgangsport (6) eines einzelnen Test-Sendeschalters (1, 31) und andererseits einen oder mehrere Testempfänger-Eingangsports (5) oder -Ausgangsports (6) eines oder mehrerer Test-Empfängerschalter (1, 33) auswählt.

9. Verfahren zur Erzeugung und Kontrolle von Testverkehr nach dem vorhergehenden Anspruch, **dadurch gekennzeichnet, dass**:
> die Verkehrskontrollkomponente (24) wenigstens kontrolliert, ob die Adresse des Testempfänger-Eingangsports (5) oder -Ausgangsports (6) des Test-Empfängerschalters (1, 33), die von der Nachricht oder den Nachrichten desselben Testverkehrs erreicht wird, richtig ist:
o die Ankunftsreihenfolge der Nachrichten desselben Testverkehrs,
o die Ankunftsreihenfolge der Teile derselben Nachricht, die nacheinander während der Erzeugung und Sendung desselben Testverkehrs gesendet werden.

10. Verfahren zur Erzeugung und Kontrolle von Testverkehr nach einem der vorhergehenden Ansprüche, **dadurch gekennzeichnet, dass**: entweder die Auswahl einerseits einen oder mehrere Testsende-Eingangsports (5) oder -Ausgangsports (6) eines oder mehrerer Test-Sendeschalter (1, 31) und andererseits einen einzelnen Testempfänger-Eingangsport (5) oder -Ausgangsport (6) eines einzelnen Test-Empfängerschalters (1, 33) auswählt,
oder die Auswahl einerseits einen oder mehrere Testsende-Eingangsports (5) oder - Ausgangsports (6) eines oder mehrerer Test-Sendeschalter (1, 31) und andererseits einen oder mehrere Testempfänger-Eingangsports (5) oder -Ausgangsports (6) eines oder mehrerer Test-Empfängerschalter (1, 33) auswählt.

11. Verfahren zur Erzeugung und Kontrolle von Testverkehr nach einem der Ansprüche 6 bis 10, **dadurch gekennzeichnet, dass**:
> die Verkehrskontrollkomponente (24):
o zuerst überprüft, ob die Adresse des Testempfänger-Eingangsports (5) oder -Ausgangsports (6) des Test-Empfängerschalters (1, 33) die von einer Nachricht des Testverkehrs erreicht wird, richtig ist,
o dann, wenn diese Adresse richtig ist, die Integrität der Daten in dieser Nachricht des Testverkehrs kontrolliert.

12. Verfahren zur Erzeugung und Kontrolle von Testverkehr nach einem der vorhergehenden Ansprüche, **dadurch gekennzeichnet, dass** wenigstens ein Teil des Testverkehrs, bevorzugt der gesamte Testverkehr, der an einem ausgewählten Testsende-Ausgangsport (6) eines ausgewählten Test-Sendeschalters (1, 31) erzeugt und gesendet wird, zunächst über einen Eingangsport (5) dieses ausgewählten Test-Sendeschalters (1, 31) zurückfließt, bevor sie diesen ausgewählten Test-Sendeschalter (1, 31) verlässt, um dann zu ihrem ausgewählten Testempfänger-Eingangsport (5) oder -Ausgangsport (6) des ausgewählten Test-Empfängerschalters (1, 33) zu gelangen, entweder direkt oder indirekt über einen oder mehrere andere Schalter (1, 32) des Netzes.

13. Verfahren zur Erzeugung und Kontrolle von Testverkehr nach einem der vorhergehenden Ansprüche, **dadurch gekennzeichnet, dass** der erzeugte Testverkehr eine oder mehrere Nachrichten umfasst, wobei die oder jede Nachricht einen Testverkehrsindikator (49) umfasst, der angibt, ob sie zu einem Testverkehr oder zu funktionalem Verkehr gehört, wobei die Nachricht oder die letzte Nachricht einen Indikator (42) für das Ende des Testverkehrs umfasst, der das Ende des aktuellen Testverkehrs angibt, wobei dieser Indikator (42) für das Ende des aktuellen Testverkehrs die Rücksetzung des Zustands der Verkehrskontrollkomponente(n) (24) des oder der Empfänger-Eingangsports (5) oder Ausgangsports (6) des aktuellen Tests auslöst.

14. Verfahren zur Erzeugung und Kontrolle von Testverkehr nach einem der vorhergehenden Ansprüche, **dadurch gekennzeichnet, dass**: entweder die verschiedenen aufeinanderfolgenden Nachrichten desselben Testverkehrs, die über denselben physikalischen Kanal laufen, alle über einen einzigen virtuellen Kanal laufen, der mit diesem physikalischen Kanal verbunden ist, oder
die verschiedenen aufeinanderfolgenden Nachrichten desselben Testverkehrs, die über denselben physikalischen Kanal laufen, über verschiedene, diesem physikalischen Kanal zugeordnete virtuelle Kanäle laufen, wobei der virtuelle Kanal jeder neuen Nachricht zufällig ausgewählt wird,
oder die verschiedenen aufeinanderfolgenden Nachrichten desselben Testverkehrs, die über denselben physikalischen Kanal laufen, über diesem physikalischen Kanal zugeordnete virtuelle Kanäle laufen, wobei der virtuelle Kanal jeder neuen Nachricht jedes Mal inkrementiert wird.

15. Verfahren zur Erzeugung und Kontrolle von Testverkehr nach einem der vorhergehenden Ansprüche, **dadurch gekennzeichnet, dass**:
> der Anteil der Bandbreite, der ursprünglich für die Erzeugung und Sendung des Testverkehrs zur Verfügung steht, vom Benutzer des Erzeugungs- und Kontrollverfahrens bevorzugt von 0% bis 100% parametrisierbar ist,
➢ die Prioritätsstufe des Testverkehrs in Bezug auf den gesamten oder einen Teil des funktionalen Verkehrs vom Benutzer des Erzeugungs- und Kontrollverfahrens von der höchsten Priorität über eine oder mehrere Zwischenprioritäten bis hin zur niedrigsten Priorität parametrisiert werden kann.

16. Verfahren zur Erzeugung und Kontrolle von Testverkehr nach einem der vorhergehenden Ansprüche, **dadurch gekennzeichnet, dass**:
> die Kontrollkomponente (24) des Testverkehrs ein Statusregister umfasst, das für den von ihr kontrollierten Testverkehr gegebenenfalls speichert:
o einen Empfangsfehler,
o die Nummer der ersten fehlerhaften Nachricht,
o die Nummer des ersten Teils einer fehlerhaften Nachricht,
o die Sendeadresse,
> wobei dieses Statusregister anzeigt, ob ein Testverkehr stattfindet oder nicht.

## Claims

1. A method for generating, at test transmitter switches (1, 31) of a network of computing nodes, of a test traffic, and of control, at test destination switches (1, 33) of this network, of this test traffic, comprising:
- the possibility of generating and transmitting, at each test transmitter input (5) or output (6) port of each test transmitter switch (1, 31), a test traffic, to any test destination input (5) or output (6) port of any test destination switch (1, 33),
- the selection of at least one test transmitter input (5) or output (6) port of a test transmitter switch (1, 31) and at least one test destination input (5) or output (6) port of a test destination switch (1, 33),
- the generation and transmission, at least at a test transmitter input (5) or output (6) port of a selected test transmitter switch (1, 31), of a traffic test, to at least one test destination input (5) or output (6) port of a selected test destination switch (1, 33),
- said test traffic being generated and transmitted by a traffic generator component (23) configured as an additional input (14) of said selected test transmitter input (5) or output (6) port,
- said test traffic being controlled by a traffic controller component (24) configured to filter the output (15) of said selected test destination input (5) or output (6) port.

2. The method for generating and controlling test traffic according to claim 1, **characterised in that** each test transmitter input (5) or output (6) port of each test transmitter switch (1, 31) includes a test traffic generator component (23) which is dedicated thereto,
and/or **in that** each test destination input (5) or output (6) port of each test destination switch (1, 33) includes a test traffic controller component (24) which is dedicated thereto.

3. The method for generating and controlling test traffic according to any one of the preceding claims, **characterised in that** the generation, at least at one test transmitter switch (1, 31), of a test traffic, and the control, at least at one test destination switch (1, 33), of this test traffic, are carried out in addition to the functional traffic of this network of computing nodes.

4. The method for generating and controlling test traffic according to any one of the preceding claims, **characterised in that**:
- each test traffic generator component (23) is assigned the same identifier as the identifier of the test transmitter input (5) or output (6) port of the test transmitter switch (1, 31) to which this generator component (23) is dedicated,
- and/or to each test traffic controller component (24) is assigned the same identifier as the identifier of the test destination input (5) or output (6) port of the test destination switch (1, 33) to which this controller component (24) is dedicated.

5. The method for generating and controlling test traffic according to any one of the preceding claims, **characterised in that** it comprises:
- at least one test switch (1, 31, 32, 33) which is both test transmitter switch (1, 31) and test destination switch (1, 33), and which comprises:
- at least one test input (5) or output (6) port which is both a test transmitter input (5) or output (6) port and a test destination input (5) or output (6) port,
- preferably several, even more preferably a majority, and advantageously all, of its test input (5) or output (6) ports which are both a test transmitter input (5) or output (6) port and a test destination input (5) or output (6) port,
- preferably several, even more preferably a majority, and advantageously all, of its test switches (1, 31, 32, 33) which are both a test transmitter switch (1, 31) and a test destination switch (1, 33),
and preferably **in that** each test input (5) or output (6) port, which is both a test transmitter input (5) or output (6) port and a test destination input (5) or output (6) port, comprises both a traffic generator component (23) and a traffic controller component (24).

6. The method for generating and controlling test traffic according to any one of the preceding claims, **characterised in that**:
- for one or more test transmitter (1, 31) and/or destination (1, 33) switches, preferably for the majority of test transmitter (1, 31) and/or destination (1, 33) switches, even more preferably for all of the test transmitter (1, 31) and/or destination (1, 33) switches:
- either the majority of the input ports (5), or the majority of the output ports (6), are test transmitter and/or destination input (5) or output (6) ports,
- preferably, either all of the input ports (5), or all of the output ports (6), are test transmitter and/or destination input (5) or output (6) ports,
and/or **in that** the majority, preferably all, of the switches (1, 31, 32, 33) of the network of computing nodes, are test transmitter (1, 31) and/or destination (1, 33) switches, and/or **in that**:
- for one or more test transmitter (1, 31) and/or destination (1, 33) switches, preferably for the majority of test transmitter (1, 31) and/or destination (1, 33) switches, even more preferably for all of the test transmitter (1, 31) and/or destination (1, 33) switches:
- the majority, preferably all, of the test transmitter and/or destination input (5) or output (6) ports are output (6) ports.

7. The method for generating and controlling test traffic according to any one of the preceding claims, **characterised in that** the selection, on the one hand, first of the test transmitter switch (1, 31) and then of its test transmitter input (5) or output (6) port and, on the other hand, first of the test destination switch (1, 33) then of its test destination input (5) or output (6) port, is performed according to the path in the network that will have to be tested.

8. The method for generating and controlling test traffic according to any one of the preceding claims, **characterised in that**: either the selection selects, on the one hand, a single test transmitter input (5) or output (6) port of a single test transmitter switch (1, 31) and, on the other hand, a single test destination input (5) or output (6) port of a single test destination switch (1, 33),
or the selection selects, on the one hand, a single test transmitter input (5) or output (6) port of a single test transmitter switch (1, 31) and, on the other hand, one or more test destination input (5) or output (6) ports of one or more test destination switches (1, 33).

9. The method for generating and controlling test traffic according to the preceding claim, **characterised in that**:
- the traffic controller component (24) checks, at least whether the address of the test destination input (5) or output (6) port of the test destination switch (1, 33) reached by the message(s) of the same test traffic is correct:
- the order of arrival of messages from the same test traffic,
- the order of arrival of parts of the same message sent successively during the generation and transmission of the same test traffic.

10. The method for generating and controlling test traffic according to any one of the preceding claims, **characterised in that**: either the selection selects, on the one hand, one or more test transmitter input (5) or output (6) ports of one or more test transmitter switches (1, 31) and, on the other hand, a single test destination input (5) or output (6) port of a single test destination switch (1, 33),
or the selection selects, on the one hand, one or more test transmitter input (5) or output (6) ports of one or more test transmitter switches (1, 31) and, on the other hand, one or more test destination input (5) or output (6) ports of one or more test destination switches (1, 33).

11. The method for generating and controlling test traffic according to any one of claims 6 to 10, **characterised in that**:
- the traffic controller component (24):
- first verifies whether the address of the test destination input (5) or output (6) port of the test destination switch (1, 33) reached by a test traffic message is correct,
- then, if this address is correct, checks the data integrity of this test traffic message.

12. The method for generating and controlling test traffic according to any one of the preceding claims, **characterised in that** at least part of the test traffic, preferably all of the test traffic, which is generated and transmitted at a selected test transmitter output port (6) of a selected test transmitter switch (1, 31), first loops back through an input port (5) of this selected test transmitter switch (1, 31), before leaving this selected test transmitter switch (1, 31), to then go to its selected test destination input (5) or output (6) port of the selected test destination switch (1, 33), either directly or indirectly through one or more other switches (1, 32) of the network.

13. The method for generating and controlling test traffic according to any one of the preceding claims, **characterised in that** the generated test traffic comprises one or more messages, the message or each message comprising a test traffic indicator (49) specifying whether it belongs to test traffic or to functional traffic, the message or the last message comprising an end of test traffic indicator (42) specifying the end of the current test traffic, this indicator of the end of a current test traffic (42) triggering the resetting of the state of the traffic controller component(s) (24) of the current test destination input (5) or output (6) port(s).

14. The method for generating and controlling test traffic according to any one of the preceding claims, **characterised in that**: either the different successive messages of the same test traffic, travelling on the same physical channel, all travel on the same virtual channel associated with this physical channel,
or the different successive messages of the same test traffic, travelling on the same physical channel, travel on different virtual channels associated with this physical channel, the virtual channel of each new message being selected randomly,
or the different successive messages of the same test traffic, travelling on the same physical channel, travel on different virtual channels associated with this physical channel, the virtual channel of each new message being incremented each time.

15. The method for generating and controlling test traffic according to any one of the preceding claims, **characterised in that**:
- the proportion of bandwidth initially available for the generation and transmission of test traffic can be configured by the user of the generation and control method, preferably from 0% to 100%,
- the priority level of the test traffic, compared to all or part of the functional traffic, can be configured by the user of the generation and control method, from the highest priority to the lowest priority, with one or more intermediate priorities.

16. The method for generating and controlling test traffic according to any one of the preceding claims, **characterised in that**:
- the test traffic controller component (24) comprises a status register which stores, for the test traffic it controls, if applicable:
- a reception error,
- the number of the first error message,
- the number of the first part of an error message,
- the transmission address,
- this status register indicating whether or not a test traffic is in progress.
